# EUROPÄISCHE PATENTSCHRIFT

(11) **EP 1 841 954 B1**
(45) Veröffentlichungstag und Bekanntmachung des Hinweises auf die Patenterteilung: **14.10.2009**
(21) Anmeldenummer: 05813847.0
(22) Anmeldetag: 25.11.2005
(51) Int. Cl.: F01L 1/34

(54) **ELEKTROMAGNETISCHES HYDRAULIKVENTIL**
ELECTROMAGNETIC HYDRAULIC VALVE
SOUPAPE HYDRAULIQUE ELECTROMAGNETIQUE

(30) Priorität: 27.01.2005 DE 102005003446
(43) Veröffentlichungstag der Anmeldung: 10.10.2007
(73) Patentinhaber: Schaeffler KG, 91074 Herzogenaurach (DE)
(72) Erfinder: DAUT, Klaus, 91074 Herzogenaurach (DE)
(86) Internationale Anmeldenummer: PCT/EP2005/012606
(87) Internationale Veröffentlichungsnummer: WO 2006/079382

(56) Entgegenhaltungen:
- EP-A- 1 582 794
- DE-A1- 10 230 966
- DE-A1- 10 239 207

## Beschreibung

### Anwendungsgeblet der Erfindung

Die Erfindung betrifft ein elektromagnetisches Hydraulikventil, insbesondere Proportionalventil zur Steuerung einer Vorrichtung zur Drehwinkelverstellung einer Nockenwelle gegenüber einer Kurbelwelle einer Brennkraftmaschine nach dem Oberbegriff von Anspruch 1.

### Hintergrund der Erfindung

Mit Nockenwellenverstelleinrichtungen wird der Kraftstoffbedarf eines Verbrennungsmotors an seine jeweils abzugebende Leistung angepasst. Hierbei wird der Hub der Einlassventile so verstellt, dass die für die abzugebende Leistung erforderliche Kraftstoffmenge in den Verbrennungsraum eingespritzt wird. Um den Ventilhub zu verändern, wird die Nockenwelle relativ zur Kurbelwelle verdreht. Hierfür ist ein Versteller vorgesehen, der mit einem Hydrozylinder vergleichbar ist. Als Druckmittel dient das Hydrauliköl des Verbrennungsmotors. Als Druckölquelle wird der Schmierölkreislauf des Verbrennungsmotors genutzt. Die Betätigung des Verstellers erfolgt über das elektromagnetische Hydraulikventil.

Durch die DE 198 53 670 A1 und DE 102 30966 A1 ist ein gattungsbildendes elektromagnetisches Hydraulikventil bekannt, das als Proportionalventil zur Steuerung einer Vorrichtung zur Drehwinkelverstellung einer Nockenwelle gegenüber einer Kurbelwelle einer Brennkraftmaschine ausgebildet ist und im Wesentlichen aus einem Elektromagneten und aus einem an diesem befestigten hydraulischen Ventilteil besteht. Der Elektromagnet weist dabei ein hohlzylindrisches Magnetgehäuse auf, in dem zumindest eine Spulenwicklung und ein axialbeweglicher Magnetanker angeordnet sind. Außerdem sind im Magnetgehäuse ein erster und ein zweiter Polschuh angeordnet. Der Ventilteil des Proportionalventils wird demgegenüber durch ein stirnseitig offenes hohlzylindrisches Ventilgehäuse gebildet, in dessen Hohlzylinder ein vom Magnetanker des Elektromagneten über eine Stößelstange axial verschiebbarer Steuerkolben aufgenommen ist. Darüber hinaus weist das Ventilgehäuse an seinem Außenumfang mehrere axial zueinander beabstandete umlaufende Ringnuten auf, in die jeweils mehrere in den Hohlzylinder des Ventilgehäuses mündende und als Querbohrungen ausgebildete Radialöffnungen eingearbeitet sind. Der hohlzylindrisch ausgebildete Steuerkolben des Ventilteils steht dabei an einer Stirnseite mit der Stößelstange des Magnetankers sowie an der anderen Stirnseite mit einer entgegengesetzt zur Kraft des Magnetankers wirkenden Druckfeder in Verbindung und weist an seinem Außenumfang zwei ringförmige Steuerabschnitte auf, welche je nach Bestromung des Elektromagneten die Radialöffnungen von zumindest zwei Ringnuten im Ventilgehäuse über- oder unterdecken. Darüber hinaus weist der Steuerkolben axial einen als Längsbohrung ausgebildeten Hohlraum auf, der druckfederseitig offen und stößelstangenseitig über mehrere als Radialbohrungen ausgebildete radiale Fenster mit dem Hohlzylinder des Ventilgehäuses verbunden und zur Weiterleitung des Hydraulikmittels innerhalb des Ventilgehäuses vorgesehen ist.

Weitere gattungsgemäß ausgebildete elektromagnetische Hydraulikventile sind in der DE 197 45 411 A1, DE 199 38 884 A1, DE 199 56 160 A1, DE 100 56 200 A1, DE 102 39 207 A1 und DE 103 00 974 A1 vorbeschrieben.

Derartige als Hohlkolben ausgebildete Steuerkolben werden im Allgemeinen aus einem Eisenwerkstoff hergestellt. Da im Hydraulikventil zwischen der Stößelstange und dem Steuerkolben erhebliche Reibung entsteht, ist letztgenannter einem Härtevorgang, beispielsweise einer Einsatzhärtung, zu unterwerfen. Um bei diesem Härtevorgang einen Maßverzug des Steuerkolbens zu verhindern, der sich negativ auf die Arbeitsweise des Ventils auswirken würde, wird nur die Stirnfläche des Kolbens gehärtet, die an der Stößelstange anliegt. Dies erfolgt derart, dass der Rest des Steuerkolbens von einer Kupferhülse aufgenommen wird, die zusätzlich noch gekühlt werden muss. Nach dem Härten wird der gesamte Steuerkolben gewaschen und anschließend wird zusätzlich die der Stößelstange zugewandte Stirnfläche einem Schleifvorgang unterworfen. Es liegt auf der Hand, dass eine solche Herstellung eines Steuerkolbens sehr aufwendig und damit auch teuer ist.

### Zusammenfassung der Erfindung

Ausgehend von den Nachteilen des bekannten Standes der Technik liegt der Erfindung die Aufgabe zugrunde, für ein elektromagnetisches Hydraulikventil einen hohlzylindrischen Steuerkolben bereitzustellen, der sich insbesondere leicht fertigen lässt und der gute Verschleißeigenschaften aufweist.

Erfindungsgemäß wird diese Aufgabe nach dem kennzeichnenden Teil von Anspruch 1 in Verbindung mit dessen Oberbegriff dadurch gelöst, dass auf dem in Richtung der Stößelstange liegenden Ende des Steuerkolbens eine aus einem Boden und einer hohlzylindrischen Seitenwand bestehende Buchse angeordnet ist, die eine größere Härte als der Steuerkolben aufweist.

Der Vorteil dieses gebauten, aus zwei Teilen bestehenden Steuerkolbens liegt darin, dass der eigentliche Kolben in seiner Fertigung wesentlich vereinfacht und damit verbilligt ist. Insbesondere entfällt seine aufwendige Wärmebehandlung zur Härtesteigung an dem der Stößelstange zugewandten Teil. Ebenso entfällt die schleifende Bearbeitung dieser dem Stößel zugewandten Stirnfläche des Kolbens. Die zugehörige Buchse lässt sich in den unterschiedlichsten Formen und Abmessungen, die dem jeweiligen Steuerkolben angepasst sind, in einfacher Weise als Massenprodukt herstellen. Die erforderliche Härte kann in einem Durchlaufverfahren ebenfalls problemlos eingestellt werden. Anschließend brauchen nur noch Steuerkolben und Buchse miteinander verbunden werden, wobei alle dem Fachmann geläufigen Verbindungsarten denkbar sind, z. B. ein Presssitz, ein Verstemmen, ein Umbördeln oder auch ein Kleben.

Es ist auch denkbar, auf das Fixieren der Steuerbuchse am Steuerkolben zu verzichten, da letztgenannter durch die Druckfeder gegen die Stößelstange angepresst wird. Dadurch ist sichergestellt, dass sich die Steuerbuchse nicht vom Steuerkolben lösen kann.

Weitere vorteilhafte Ausführungsvarianten der Erfindung sind in den Unteransprüchen beschrieben.

So geht aus Anspruch 2 hervor, dass die Buchse aus einem Eisenwerkstoff hergestellt, als ein Spanlosteil ausgebildet und einer Wärmebehandlung zur Steigerung der Härte unterworfen ist. Wie bereits ausgeführt, lässt sich ein solches Teil in den unterschiedlichsten Formvarianten und Abmessungen in billiger Art und Weise fertigen.

Nach einem weiteren zusätzlichen Merkmal gemäß Anspruch 3 ist vorgesehen, dass im Boden der Buchse eine in Richtung der Stößelstange weisende zentrische Erhebung angeordnet ist. Dies kann besonders dann von Vorteil sein, wenn die der Stößelstange zugewandte Stirnfläche des Steuerkolbens in ihrem Zentrum eine Erhebung aufweist, welche durch das Drehen des Steuerkolbens zwischen zwei Spitzen bedingt ist. Diese im Mittelteil des Steuerkolbens angeordnete Erhebung wird dann von der zentrischen Erhebung der Buchse aufgenommen, so dass eine einwandfreie und passgenaue Verbindung von Steuerkolben und Buchse realisiert ist.

Nach einem zusätzlichen weiteren Merkmal gemäß Anspruch 4 soll die hohlzylindrische Seitenwand der Buchse an vom Boden abgewandten Ende einen Bördelrand aufweisen, der eine geringere Wanddicke als diese aufweist. Durch diese verringerte Wanddicke ist ein besonders einfaches Umbördeln möglich.

In Weiterbildung der Erfindung nach Anspruch 4 soll der Steuerkolben aus einem Kunststoff oder aus einem Leichtmetall gefertigt sein. Beide Materialien sorgen wegen ihrer gegenüber Stahl geringeren Dichte dafür, dass das Gesamtgewicht des Steuerkolbens deutlich reduziert ist. So kann der Steuerkolben beispielsweise als Aluminiumgussteil oder als Kunststoffteil durch Spritzgießen hergestellt sein. Auf diese Weise entfallen aufwendige spanabhebende Nacharbeiten am Steuerkolben. Sofern die axialen Belastungen des Kolbens es zulassen, kann dieser, wie bereits ausgeführt, aus einem Kunststoff gebildet sein. Kunststoffe erweisen sich hinsichtlich ihres tribologischen Verhaltens als relativ günstig, dies insbesondere nach Wiederbefeuerung der Brennkraftmaschine und noch nicht ausreichend anliegendem Hydraulikmittel. Vorteilhaft hat sich in diesem Zusammenhang ein Kunststoff aus der Gattung der Polyamide erwiesen, der Verstärkungseinlagerungen wie Fasern oder Partikel enthalten kann. Wichtig ist in diesem Zusammenhang, dass die eingesetzten Kunststoffe im Temperaturbereich des Hydraulikventils dauerfest sind sowie eine genügende Resistenz gegen über dem anliegenden Medium aufweisen. Polyamide eignen sich daher ganz besonders, da ihre gute Formbeständigkeit in der Wärme, die Beständigkeit gegen Treib- und Schmierstoffe und die ausgewogenen mechanischen Eigenschaften eine Vielfalt von Anwendungsmöglichkeiten bieten.

Schließlich geht aus dem letzten Anspruch 6 hervor, dass der Kunststofifkolben mit der Buchse durch Spritzgießen verbunden ist. Dazu wird die aus einem Eisenwerkstoff bestehende, vorzugsweise in einem Wärmebehandlungsverfahren gehärtete Buchse mit in die Spritzform eingelegt, so dass in einfacher Weise eine formschlüssige Verbindung zwischen Steuerkolben und Buchse hergestellt ist.

Die Erfindung wird an nachstehendem Ausführungsbeispiel näher erläutert.

### Kurze Beschreibung der Zeichnungen

Es zeigen:
- Figur 1: einen Längsschnitt durch ein elektromagnetisches Hydraulikventil nach dem bisherigen Stand der Technik,
- Figur 2: einen Längsschnitt durch den Ventilteil eines Hydraulikventils gemäß der Erfindung und
- Figur 3: eine vergrößerte Darstellung einer mit dem Steuerkolben verbundenen Buchse.

### Ausführliche Beschreibung der Zeichnungen

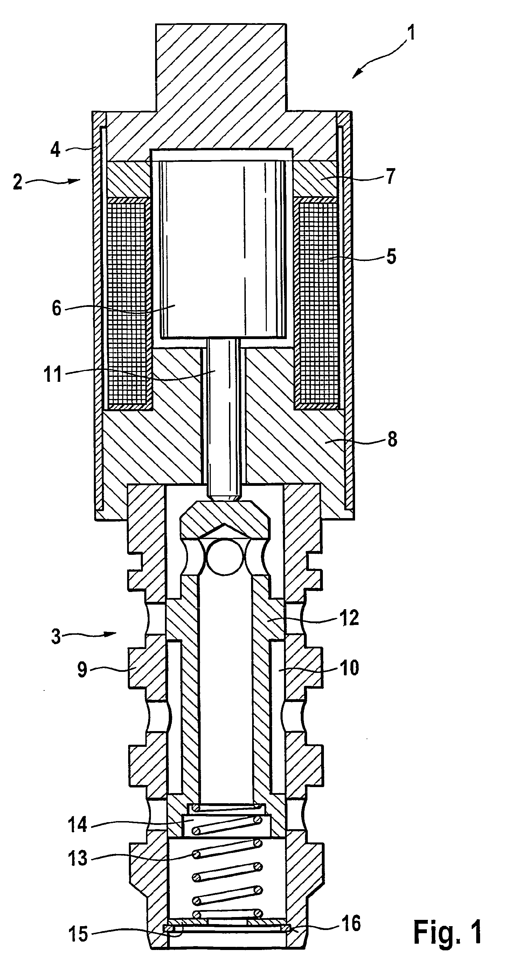

Aus Figur 1 geht ein aus dem Stand der Technik bekanntes elektromagnetisches Hydraulikventil 1 hervor, das als Proportionalventil zur Steuerung einer Vorrichtung zur Drehwinkelverstellung einer Nockenwelle gegenüber einer Kurbelwelle einer Brennkraftmaschine ausgebildet ist. Dieses besteht im wesentlichen aus einem Elektromagnet 2 und einem an diesem befestigten Ventilteil 3. Der Elektromagnet 2 weist dabei ein hohlzylindrisches Magnetgehäuse 4 auf, in dem eine Spulenwicklung 5 und ein axial beweglicher Magnetanker 6 angeordnet sind. Die Spulenwicklung 5 ist von einem ersten Polschuh 7 sowie von einem zweiten Polschuh 8 axial begrenzt. Der Ventilteil 3 wird demgegenüber durch ein hohlzylindrisches Ventilgehäuse 9 gebildet, in dessen Hohlzylinder 10 ein vom Magnetanker 6 des Elektromagneten 2 über eine Stößelstange 11 axial verschiebbarer Steuerkolben 12 aufgenommen ist und welches am Außenumfang mehrere, ebenfalls nicht näher bezeichnete umlaufende Ringnuten mit in dessen Hohlzylinder 10 mündenden Radialbohrungen für den Zu- und Abfluss des Hydraulikmittels aufweist. Die Rückstellung des Steuerkolbens 12 erfolgt dabei durch eine entgegen der Kraft des Magnetankers 6 wirkende Druckfeder 13, die an einem Ende in einer Federaufnahmebohrung 14 an der Stirnseite des Steuerkolbens 12 anliegt und am anderen Ende auf einem im Hohlzylinder 10 des Ventilgehäuses 9 befestigten Stützelement 15 aufliegt. Dieses Stützelement 15 ist in einer im Ventilgehäuse 9 eingebrachten Nut 16 fixiert.

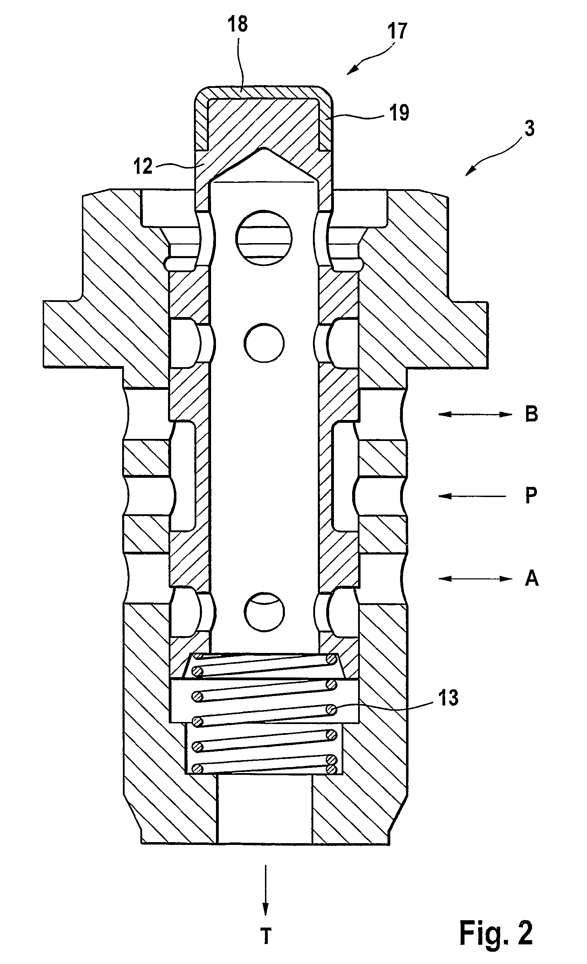

Wie insbesondere der in Figur 2 dargestellte Ventilteil 3 erkennen lässt, besitzt das Hydraulikventil 1 in bekannter Art und Weise einen mit P bezeichneten Druckanschluss. Über diesen erfolgt eine wahlweise Zuleitung von Hydraulikmittel zu Arbeitsanschlüssen A, B, beispielsweise zu Druckkammern vor Stirnseiten eines Kolbens einer Vorrichtung zur hydraulischen Nockenwellenverstellung. Eine Ableitung des Hydraulikmittels aus einer der genannten Druckkammern über die Arbeitsanschlüsse A, B in Rückflussrichtung ist über den Tankanschluss T dargestellt. Auf die genaue Beschreibung der Wirkungsweise des Ventilteils kann an dieser Stelle verzichtet werden, weil sie nicht Bestandteil der vorliegenden Erfindung ist und außerdem dem Fachmann hinreichend bekannt ist. So ist beispielsweise eine Beschreibung der Wirkungsweise der bereits als Stand der Technik genannten DE 198 53 670 A1 zu entnehmen. Wie den beiden Figuren weiter entnehmbar, wird der als Hohlzylinder ausgebildete Steuerkolben 12 im Ventilgehäuse 9 durch die Stößelstange 11 in axialer Richtung verschoben.

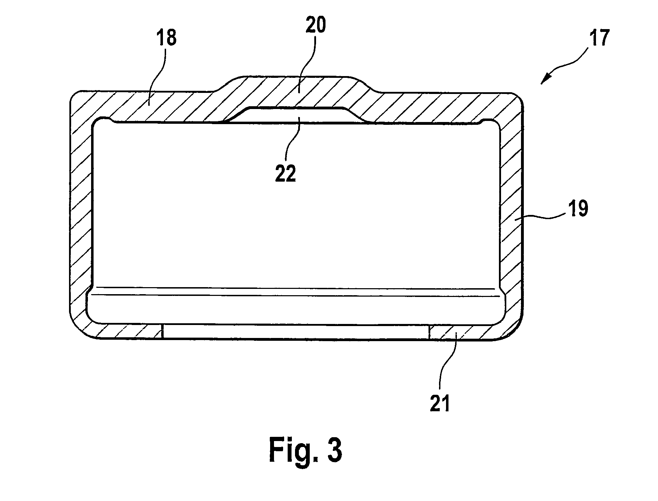

Wie aus den Figuren 2 und 3 ersichtlich, besteht die Erfindung darin, dass der Steuerkolben 12 an seinem in Richtung Stößelstange 11 weisenden Ende mit einer Buchse 17 versehen ist, die aus einem Boden 18 und einer zugehörigen Seitenwand 19 besteht. Diese Buchse 17 kann beispielsweise auf den Steuerkolben 12 aufgepresst werden und sorgt letztendlich dafür, dass ein den jeweiligen Betriebsverhältnissen eingestellter Härtewert garantiert ist, der zur Verschleißminderung zwischen Stößelstange 11 und Steuerkolben 12 dient.

Die in Figur 3 ohne Steuerkolben vergrößert dargestellte Buchse 17 ist als ein Spanlosteil hergestellt und weist am vom Boden 18 abgewandten Seite einen Bördelrand 21 auf, der eine geringere Querschnittsdicke als die Seitenwand 19 hat. Darüber hinaus ist der Boden 18 mit einer in Richtung Stößelstange 11 weisenden zentrischen Erhebung 20 versehen, an der diese anliegt. Im Inneren der Buchse 17 ist ein Freiraum 22 gebildet, der durch die zentrische Erhebung 20 bedingt ist. Dieser Freiraum 22 sorgt dafür, dass unter Umständen vorhandene Erhebungen im Mittelteil des Steuerkolbens 12 aufgenommen werden können. Die Buchse ist einsatzgehärtet und angelassen und weist eine Härte von 710 + 100 HV1 auf.

### Bezugszeichen

- 1: Hydraulikventil
- 2: Elektromagnet
- 3: Ventilteil
- 4: Magnetgehäuse
- 5: Spulenwicklung
- 6: Magnetanker
- 7: erster Polschuh
- 8: zweiter Polschuh
- 9: Ventilgehäuse
- 10: Hohlzylinder
- 11: Stößelstange
- 12: Steuerkolben
- 13: Druckfeder
- 14: Federaufnahmebohrung
- 15: Stützelement
- 16: Nut
- 17: Buchse
- 18: Boden
- 19: Seitenwand
- 20: zentrische Erhebung
- 21: Bördelrand
- 22: Freiraum

- A: Arbeitsanschluss
- B: Arbeitsanschluss
- P: Druckanschluss
- T: Tankanschluss

## Patentansprüche

1. Elektromagnetisches Hydraulikventil (1), insbesondere Proportionalventil zur Steuerung einer Vorrichtung zur Drehwinkelverstellung einer Nockenwelle gegenüber einer Kurbelwelle einer Brennkraftmaschine, bestehend zum einen aus einem Elektromagnet (2) mit einem hohlzylindrischen Magnetgehäuse (4), zumindest einer Spulenwicklung (5) und einem axial beweglichen Magnetanker (6), sowie einem ersten und einem zweiten Polschuh (7,8) und zum anderen aus einem Ventilteil (3) mit einem hohlzylindrischen Ventilgehäuse (9), in dem ein vom Magnetanker (6) des Elektromagneten (2) über eine Stößelstange (11) axial verschiebbarer Steuerkolben (12) aufgenommen ist, wobei im Ventilgehäuse (9) Druckmittelanschlüsse ausgebildet sind, die abhängig von der Stellung des Steuerkolbens (12) miteinander verbindbar bzw. trennbar sind und wobei die Rückstellung des Steuerkolbens (12) durch eine entgegen der Kraft des Magnetankers (6) wirkende Druckfeder (13) erfolgt, **dadurch gekennzeichnet, dass** auf dem in Richtung der Stößelstange (11) liegenden Ende des Steuerkolbens (12) eine aus einem Boden (18) und einer hohlzylindrischen Seitenwand (19) bestehende Buchse (17) angeordnet ist, die eine größere Härte als der Steuerkolben (12) aufweist.

2. Elektromagnetisches Hydraulikventil (1) nach Anspruch 1, **dadurch gekennzeichnet, dass** die Buchse (17) aus einem Eisenwerkstoff hergestellt, als ein Spanlosteil ausgebildet und einer Wärmebehandlung zur Steigerung der Härte unterworfen ist.

3. Elektromagnetisches Hydraulikventil (1) nach Anspruch 1, **dadurch gekennzeichnet, dass** im Boden (18) der Buchse (17) eine in Richtung der Stößelstange (11) weisende zentrische Erhebung (20) angeordnet ist.

4. Elektromagnetisches Hydraulikventil (1) nach Anspruch 1, **dadurch gekennzeichnet, dass** die hohlzylindrische Seitenwand (19) der Buchse (17) an vom Boden (18) abgewandten Ende einen Bördelrand (21) aufweist, der eine geringere Wanddicke als diese aufweist.

5. Elektromagnetisches Hydraulikventil (1) nach Anspruch 1, **dadurch gekennzeichnet, dass** der Steuerkolben (12) aus einem Kunststoff oder aus einem Leichtmetall gefertigt ist.

6. Elektromagnetisches Hydraulikventil (1) nach Anspruch 5, **dadurch gekennzeichnet, dass** der Kunststoffkolben mit der Buchse (17) durch Spritzgießen verbunden ist.

## Claims

1. Electromagnetic hydraulic valve (1), in particular proportional valve, for controlling a device for the rotational angle adjustment of a camshaft relative to a crankshaft of an internal combustion engine, composed on the one hand of an electromagnet (2) with a hollow-cylindrical magnet housing (4), at least one coil winding (5) and an axially moveable magnet armature (6), and also a first and a second pole shoe (7, 8), and on the other hand of a valve part (3) with a hollow-cylindrical valve housing (9) in which is accommodated a control piston (12) which can be moved axially by the magnet armature (6) of the electromagnet (2) via a plunger rod (11), with pressure medium connections being formed in the valve housing (9), which pressure medium connections can be connected to or separated from one another as a function of the position of the control piston (12), and with the return of the control piston (12) being effected by a pressure spring (13) which acts counter to the force of the magnet armature (6), **characterized in that** a sleeve (17), which is composed of a base (18) and a hollow-cylindrical side wall (19), is arranged on that end of the control piston (12) which is situated in the direction of the plunger rod (11), which sleeve (17) has a greater hardness than the control piston (12).

2. Electromagnetic hydraulic valve (1) according to Claim 1, **characterized in that** the sleeve (17) is produced from an iron material, is formed as a part which is produced in a non-cutting process, and undergoes a heat treatment in order to increase its hardness.

3. Electromagnetic hydraulic valve (1) according to Claim 1, **characterized in that** a central elevation (20), which points in the direction of the plunger rod (11), is arranged in the base (18) of the sleeve (17).

4. Electromagnetic hydraulic valve (1) according to Claim 1, **characterized in that** the hollow-cylindrical side wall (19) of the sleeve (17) has, at the end remote from the base (18), a flanged edge (21) which has a smaller wall thickness than said hollow-cylindrical side wall (19).

5. Electromagnetic hydraulic valve (1) according to Claim 1, **characterized in that** the control piston (12) is produced from a plastic or from a light metal.

6. Electromagnetic hydraulic valve (1) according to Claim 5, **characterized in that** the plastic piston is connected to the sleeve (17) by means of injection moulding.

## Revendications

1. Soupape hydraulique électromagnétique (1), en particulier soupape proportionnelle pour la commande d'un dispositif pour le réglage de l'angle de rotation d'un arbre à came par rapport à un vilebrequin d'un moteur à combustion interne, constituée d'une part d'un électroaimant (2) avec un boîtier magnétique cylindrique creux (4), d'au moins un enroulement de bobine (5) et d'un induit magnétique (6) mobile axialement, ainsi que d'une première et d'une deuxième pièce polaire (7, 8), et d'autre part d'une partie de soupape (3) avec un boîtier de soupape cylindrique creux (9), dans lequel est reçu un piston de commande (12) déplaçable axialement par l'induit magnétique (6) de l'électroaimant (2) par le biais d'une tige poussoir (11), des raccords de milieu sous pression étant réalisés dans le boîtier de soupape (9), lesquels peuvent être connectés ou séparés en fonction de la position du piston de commande (12), et la position de retour du piston de commande (12) s'obtenant par un ressort de pression (13) agissant à l'encontre de la force de l'induit magnétique (6), **caractérisée en ce qu'**une douille (17) constituée d'un fond (18) et d'une paroi latérale cylindrique creuse (19) est disposé sur l'extrémité du piston de commande (12) située dans la direction de la tige poussoir (11), et présente une plus grande dureté que le piston de commande (12).

2. Soupape hydraulique électromagnétique (1) selon la revendication 1, **caractérisée en ce que** la douille (17) est fabriquée en un matériau ferreux, est réalisée sous forme de pièce sans enlèvement de copeaux et est soumise à un traitement thermique pour augmenter sa dureté.

3. Soupape hydraulique électromagnétique (1) selon la revendication 1, **caractérisée en ce qu'**un rehaussement (20) central tourné dans la direction de la tige poussoir (11) est disposé dans le fond (18) de la douille (17).

4. Soupape hydraulique électromagnétique (1) selon la revendication 1, **caractérisée en ce que** la paroi latérale cylindrique creuse (19) de la douille (17) présente à l'extrémité opposée au fond (18) un bord rabattu (21) qui présente une plus faible épaisseur de paroi que celle-ci.

5. Soupape hydraulique électromagnétique (1) selon la revendication 1, **caractérisée en ce que** le piston de commande (12) est fabriqué en plastique ou en un métal léger.

6. Soupape hydraulique électromagnétique (1) selon la revendication 5, **caractérisée en ce que** le piston en plastique est connecté à la douille (17) par moulage par injection.
